# EUROPÄISCHE PATENTANMELDUNG

(11) **EP 1 236 783 A1**
(43) Veröffentlichungstag der Anmeldung: **04.09.2002**
(21) Anmeldenummer: 01104819.6
(22) Anmeldetag: 27.02.2001
(51) Int. Cl.: C09K 3/18, C08J 3/05, D06M 15/277, D06M 15/507, D06M 15/576

(54) **Wässrige Dispersionen von Fluorpolymer und Stabilisator**

(71) Anmelder: Ciba Spezialitätenchemie Pfersee GmbH, 86462 Langweid a.L. (DE)
(72) Erfinder: Dirschl, Franz, Dr., 86153 Augsburg (DE); Artner, Wilhelm, 86568 Motzenhofen (DE); Schidek, Edeltraud, 86199 Augsburg (DE); Gaugenrieder, Heinz, 86441 Zusmarshausen (DE); Lüdemann, Simpert, 86399 Bobingen (DE); Dang, Thi Thu Thao, 86154 Augsburg (DE)

(57) **Zusammenfassung**

Die Stabilität wäßriger Dispersionen von Fluorpolymeren kann erhöht werden durch Zusatz eines oder mehrerer Stabilisatoren. Die Stabilisatoren sind ausgewählt aus niedrigmolekularen Mono- oder Diestern von Glykolen als Alkoholkomponente, Mono- oder Diestem von Hydroxycarbonsäuren oder Dicarbonsäuren und Estern von Monocarbonsäuren.

Die Dispersionen eignen sich für die öl- und wasserabweisende Ausrüstung von Textilien.

## Beschreibung

Die Erfindung betrifft wäßrige Dispersionen, welche Oligomere oder Polymere mit mindestens einem Perfluoralkylrest (R_{F}) enthalten. Sie betrifft ferner die Verwendung solcher Dispersionen zur Behandlung von Fasermaterialien, insbesondere von textilen Flächengebilden in Form von Geweben oder Gewirken.

Es ist bekannt, textile Flächengebilde in Form von Geweben oder Gewirken mit wäßrigen Dispersionen von Oligomeren oder Polymeren, die Perfluoralkylreste enthalten, zu behandeln. Eine solche Ausrüstung oder Veredlung von Textilmaterialien kann den Textilien wasser- und/oder ölabweisende Eigenschaften verleihen. Auch die sogenannten soil-release und/oder soilrepellent-Eigenschaften (Schmutzentfernung bzw. Schmutzabweisung) der Textilien lassen sich hierdurch in vielen Fällen verbessern.
Produkte und Verfahren, welche für eine solche Textilausrüstung geeignet sind, werden beispielsweise beschrieben in der US 5 112 930, US 6 080 830, EP-A 1 013 687, US 5 324 763, US 4 742 140, US 4 834 764, US 5 508 370, US 3 968 066 und EP-A 348 350.

Die aus dem Stand der Technik bekannten wäßrigen Dispersionen von R_{F}-enthaltenden Polymeren weisen in einer Reihe von Fällen den Nachteil auf, daß sich ihre Stabilität bzw. Homogenität nach mittleren oder längeren Lagerzeiten verschlechtert. Dies kann zu vollständigen Trennungen des Systems führen oder zu teilweiser Abscheidung oder Aggregation von Bestandteilen der Dispersion, die sich in der Dispersion oder an der Behälterwand befinden. Die Folge sind Verarbeitungsprobleme und/oder unbefriedigende Eigenschaften ausgerüsteter Textilien. Der genannte Nachteil kann insbesondere dann häufiger auftreten, wenn es sich um Dispersionen von R_{F}-enthaltenden Polyurethanen handelt und kann durch Variation der Art und/oder der Menge an eingesetzten Dispergatoren nicht zufriedenstellend gelöst werden. Zwar läßt sich gegebenenfalls die Stabilität der Dispersion durch Verwendung hoher Konzentration an Dispergator verbessern, doch erhöhen sich dadurch die Herstellungskosten und vielfach sind dann die Eigenschaften ausgerüsteter Textilien nicht mehr zufriedenstellend, z.B. die öl- und wasserabweisenden Eigenschaften.

Der vorliegenden Erfindung lag die Aufgabe zugrunde, eine wäßrige Dispersion von Perfluoralkylgruppen (R_{F}) -enthaltenden Oligomeren oder Polymeren zur Verfügung zu stellen, welche eine verbesserte Stabilität und Lagerbeständigkeit aufweist als aus dem Stand der Technik bekannte Dispersionen solcher Oligomerer bzw. Polymerer. Die verbesserte Stabilität sollte hierbei vor allem auch bei Dispersionen von R_{F}-enthaltenden Polyurethanen resultieren, und zwar bei Verwendung üblicher Mengen an Dispergatoren, ohne daß Verarbeitung von Fasermaterialien, welche mit den Dispersionen behandelt werden oder die Eigenschaften der Fasermaterialien negativ beeinflußt werden.

Die Aufgabe wurde gelöst durch eine wäßrige Dispersion, welche folgende Komponenten enthält:
A) Wasser
B) einen Dispergator oder ein Gemisch von Dispergatoren
C) ein Oligomer oder Polymer, welches mindestens einen Perfluoroalkylrest (R_{F}) enthält oder ein Gemisch von solchen Oligomeren oder Polymeren
D) einen Stabilisator oder ein Gemisch von Stabilisatoren, ausgewählt aus Verbindungen der Formeln (I) bis (VIII) 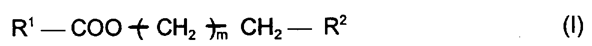 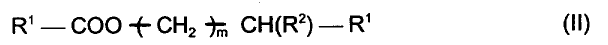 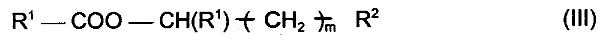 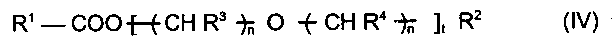 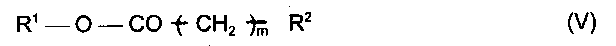 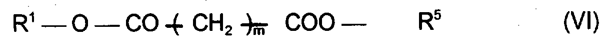 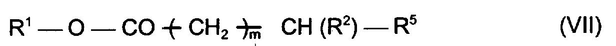 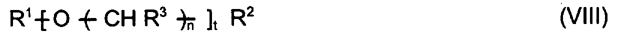
wobei alle Reste R¹ und alle Reste R⁵ unabhängig voneinander jeweils für einen Alkylrest mit 1 bis 6 Kohlenstoffatomen stehen,
alle Reste R² unabhängig voneinander jeweils für -OH, -OR¹ oder für -OOC-R¹ stehen,
m jeweils für eine Zahl von 1 bis 4 und
n jeweils für eine Zahl von 2 bis 4 steht
wobei t = 1, 2 oder 3 ist
wobei in jeder der Formeln (IV) und (VIII) entweder alle Reste R³ für H stehen oder einer der Reste R³ für R¹ und alle übrigen Reste R³ für H stehen,
wobei entweder alle Reste R⁴ für H stehen oder einer der Reste R⁴ für R¹ und alle übrigen Reste R⁴ für H stehen.

Es wurde überraschenderweise gefunden, daß wäßrige Dispersionen, welche nicht nur die Komponenten A), B) und C) enthalten, sondern auch eine oder mehrere Verbindungen der Formeln (I) bis (VIII) (Komponente D)) eine deutlich verbesserte Stabilität und Lagerbeständigkeit aufweisen gegenüber Dispersionen, welche die Komponenten A), B) und C), aber nicht Komponente D) enthalten. Diese erhöhte Beständigkeit bzw. Stabilität resultiert vor allem dann, wenn Komponente C) ein Oligourethan oder Polyurethan mit R_{F}-Gruppen ist oder ein solches Urethan enthält.
In einer bevorzugten Ausführungsform erfindungsgemäßer Dispersionen enthält daher Komponente C) mindestens ein Oligourethan oder Polyurethan, das mindestens einen Perfluoralkylrest (R_{F}) enthält. Solche Urethane werden unten näher beschrieben. Es ist dabei möglich, daß Komponente C) ausschließlich aus einem oder mehreren R_{F}-enthaltenden Urethanen besteht. Es ist aber auch möglich, daß Komponente C) zusätzlich weitere Oligomere oder Polymere mit jeweils mindestens einem R_{F}-Rest enthält, die keine Urethanbindungen aufweisen, z.B. R_{F}-enthaltende Oligo- oder Polyester und/oder R_{F}-enthaltende Oligo- oder Polyacrylate. Ferner ist es möglich, aber weniger bevorzugt, daß Komponente C) keine Verbindungen mit Urethanbindungen enthält, also z.B. nur R_{F}-enthaltende Oligo-/Polyester oder R_{F}-enthaltende Oligo-/Polyacrylate oder Gemische solcher Oligomeren/Polymeren enthält.

Erfindungsgemäße Dispersionen enthalten als Komponente A) Wasser und als Komponente B) einen Dispergator oder ein Gemisch von Dispergatoren.
Der Dispergator oder die Dispergatoren können aus allgemein bekannten oberflächenaktiven Verbindungen ausgewählt sein. Bevorzugt verwendet man Dispergatoren, wie sie üblicherweise für die Herstellung wäßriger Dispersionen von R_{F}-Resten enthaltenden Polymeren eingesetzt werden. Geeignet sind beispielsweise ethoxilierte lineare oder verzweigte Alkohole mit 6 bis 18 Kohlenstoffatomen im Alkylrest und einem Ethoxilierungsgrad von 6 bis 24 -CH₂CH₂-O-Einheiten. Ferner sind geeignet Produkte, welche sich durch Veretherung der endständigen OH-Gruppe der genannten ethoxilierten Alkohole erhalten lassen, z.B. Produkte, bei denen diese endständige OH-Gruppe durch eine -O(̵CH₂)̵ₚ H-Gruppe ersetzt ist, wobei p für eine Zahl von 1 bis 4, insbesondere für 1, steht.

Weitere geeignete Dispergatoren sind ethoxilierte Fettsäuren, wiederum beispielsweise einer Kettenlänge der Alkylgruppe von 6 bis 18 Kohlenstoffatomen und 6 bis 24 -CH₂-CH₂-O-Einheiten.
Es können vorteilhaft auch kationische Dispergatoren verwendet werden, wie z.B. Verbindungen der Formel R₄N^{⊕} Y^{⊖}, wobei Y^{⊖} für ein Anion, vorzugsweise für Cl^{⊖}, CH₃SO₄^{⊖}, CH₃COO^{⊖}, und jeder der 4 Reste R unabhängig von den anderen entweder für einen Alkylrest mit 1 bis 18 Kohlenstoffatomen steht oder für einen Rest der Formel 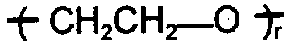 H, worin r eine Zahl von 1 bis 6 bedeutet.
Selbstverständlich können auch Gemische der genannten nichtionogenen und/oder kationaktiven Dispergatoren verwendet werden. Die Verwendung anionaktiver Dispergatoren alleine oder in Kombination mit nichtionogenen Dispergatoren ist dagegen weniger bevorzugt, kann im Einzelfall aber möglich sein.
Die genannten Arten von Dispergatoren sind handelsübliche Produkte und können nach allgemein bekannten chemischen Methoden hergestellt werden.
Die Menge an Dispergator oder Dispergatorgemisch, die verwendet wird, kann in dem Bereich liegen, wie er für Dispersionen von R_{F}-enthaltenden Oligomeren bzw. Polymeren üblich ist, z.B. im Bereich von 1 bis 10 Gew%, bezogen auf die gesamte erfindungsgemäße Dispersion. Bevorzugte mengenmäßige Zusammensetzungen der Dispersionen werden unten genannt.

Komponente C) erfindungsgemäßer Zusammensetzungen ist ein Oligomer oder ein Polymer. Nachfolgend wird in diesem Zusammenhang hierfür nur noch der Begriff "Polymer" verwendet. Bedingt durch die Herstellung mittels Polymerisation oder Polykondensation stellen Polymere praktisch immer ein Gemisch von Molekülen unterschiedlicher Kettenlängen bzw. unterschiedlichen Molekulargewichts dar. Komponente C) ist demzufolge praktisch nie eine einheitliche Verbindung, sondern ein Gemisch der erwähnten Art. Die einzelnen Moleküle von Komponente C) können sich dabei sowohl in der Kettenlänge der Reste R_{F} unterscheiden als auch in der Länge der übrigen Einheiten des Polymers, z.B. in der Anzahl von Urethan-, Ester- oder Acrylateinheiten.
Jedes Molekül der Komponente C) enthält mindestens einen Perfluoralkylrest R_{F}. Es können aber auch mehrere Reste R_{F} in einem Molekül vorliegen.
Die Reste R_{F} sind bevorzugt lineare perfluorierte Alkylreste. Besonders geeignet als Reste R_{F} sind Reste der Formel 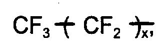 wobei x für eine Zahl von 3 bis 21, vorzugsweise von 5 bis 17 steht.
Komponente C) kann ein R_{F}-Reste enthaltendes Polyacrylat oder Polymethacrylat sein oder enthalten, das sich durch Polymerisation einer Verbindung oder eines Gemischs von Verbindungen der Formel 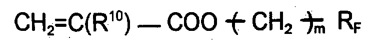 nach bekannten Methoden erhalten läßt. R¹⁰ steht hierbei für H oder CH₃ und m für eine Zahl von 1 bis 4. Solche Verbindungen lassen sich erhalten durch Umsetzung von (Meth-)Acrylsäure oder deren Derivaten mit R_{F}-enthaltenden Alkoholen.
Komponente C) kann ferner ein mindestens einen R_{F}-Rest enthaltender Polyester sein, der hergestellt werden kann durch Umsetzung (Polykondensation) eines R_{F}-enthaltenden Diols mit einer Dicarbonsäure. Geeignet hierfür sind beispielsweise lineare aliphatische Dicarbonsäuren mit insgesamt 2 bis 8 Kohlenstoffatomen.
Es können als Komponente C) auch Gemische verwendet werden, welche eines oder mehrere der genannten Polyacrylate, Polyester und der unten beschriebenen Polyurethane enthalten.

Besonders bevorzugte erfindungsgemäße Dispersionen sind solche, in denen Komponente C) ein nachfolgend näher beschriebenes Oligo- oder Polyurethan ist oder ein solches Oligo-/Polyurethan enthält.
Es handelt sich hierbei um mindestens einen R_{F}-Rest enthaltende Oligomere/Polymere, welche hergestellt werden können durch Umsetzung (Polyaddition) von R_{F}-Resten enthaltenden Diolen mit Diisocyanaten nach bekannten chemischen Methoden.

Als Komponente C) geeignete Polyacrylate sind beschrieben in der US 4 742 140, US 5 725 789 und US 3 491 169. Geeignete Polyurethane sind in der US 5 019 428, US 4 898 981, US 4 054 592, US 4 098 742 und US 5 214 121 beschrieben, geeignete Polyester in der US 3 923 715. Ferner sind in der Europäischen Patentanmeldung Nr. 00120507.9 (Anmeldetag 20. September 2000) und in der darin zitierten Literatur Angaben zu geeigneten Polyestern und Polyurethanen zu finden. Insbesondere die in dieser EP-Anmeldung genannten Polyurethane sind auch für erfindungsgemäße wäßrige Dispersionen gut geeignet.
Besonders bevorzugt sind erfindungsgemäße wäßrige Dispersionen, welche als Komponente C) ein Oligourethan oder Polyurethan enthalten, das erhältlich ist durch Umsetzung eines Diols oder eines Gemischs von Diolen, ausgewählt aus Diolen der Formeln (IX) bis (XII)

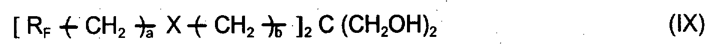

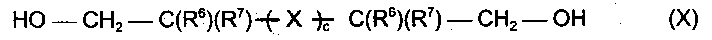

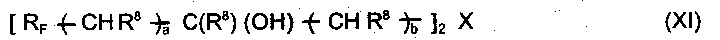

(R_{F} ― CH = CH ― CH₂ ― O ― CH₂ ― CH(OH) ― CH₂ )₂ X (XII)

mit einem Diisocyanat oder einem Gemisch von Diisocyanaten, ausgewählt aus Verbindungen der Formel (XIII)

O=C=N―R⁹―N=C=O (XIII)

wobei diese Umsetzung gegebenenfalls in Anwesenheit zusätzlicher Diole durchgeführt wird, die keine Fluoratome enthalten,
wobei
R_{F} die in Anspruch 3 genannte Bedeutung besitzt,
a für eine Zahl von 1 bis 4, vorzugsweise für 2 steht,
b für 0 oder 1 steht,
c für 0 oder 1 steht,
X für -O-, -S-, oder -NR⁴-, vorzugsweise für -S-, steht,
R⁶ für Wasserstoff oder für R¹ steht,
wobei R¹ die in Anspruch 1 genannte Bedeutung besitzt,
R⁷ für 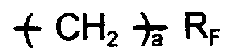 steht, wenn c=1 und für 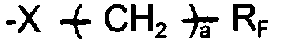 steht, wenn c=0,
R⁸ für Wasserstoff oder einen unverzweigten oder verzweigten Alkylrest mit 1 bis 18, vorzugsweise mit 2 bis 6 oder mit 16 bis 18, Kohlenstoffatomen steht.
R⁹ für einen zweiwertigen aliphatischen oder cycloaliphatischen Rest mit 4 bis 40 Kohlenstoffatomen steht oder für einen zweiwertigen aromatischen Rest der Formel -C₆H₃(R⁶)- oder - C₆H₃(R⁶)-CH₂-C₆H₃(R⁶)- oder -C₆H₃(R⁶)-C R⁶₂-C₆H₃(R⁶)- steht,
wobei C₆H₃ für den dreiwertigen, von Benzol abgeleiteten Rest steht,
wobei für den Fall, daß das Umsetzungsprodukt aus Diol und Diioscyanat noch Isocyanatgruppen enthält, diese Isocyanatgruppen gegebenenfalls blockiert werden, vorzugsweise mit einem Ketonoxim.
Die Diole der Formeln (IX) bis (XII) sind in der genannten EP-Anmeldung Nr. 00120507.9 beschrieben.

Als Komponente C) geeignete Polyurethane können auch nach folgendem Verfahren hergestellt werden:
Man setzt ein R_{F}-Gruppen enthaltendes Diol mit einem Unterschuß an Diisocyanat um, so daß das erhaltene Produkt noch freie OH-Gruppen enthält. Anschließend wird mit einem Diisocyanat, das sich von dem zuerst verwendeten unterscheidet, umgesetzt. In analoger Weise ist auch eine Herstellung von Polyurethanen durch stufenweise Verwendung unterschiedlicher R_{F}-Diole möglich. Solche Umsetzungen sind in der oben genannten Literatur beschrieben.
Die Umsetzung von R_{F}-Diol mit Diisocyanat zu Polyurethan kann nach allgemein bekannten Verfahren erfolgen. Bevorzugt ist hierbei die Verwendung eines üblichen Katalysators, z.B. einer Sn- oder Ti-organischen Verbindung.

Bei der Herstellung dieser Oligo- oder Polyurethane können zusätzlich zu den R_{F}-enthaltenden Diolen noch weitere Diole bei der Polyaddition verwendet werden und als Kettenverlängerungsmittel dienen. Beispiele hierfür sind N-Methyldiethanolamin, Ethylenglykol und Propylenglykol.
Außer den genannten aromatischen Resten -C₆H₃(R⁶)-, -C₆H₃(R⁶)-CH₂-C₆H₃(R⁶)- oder -C₆H₃(R⁶)-CR₂⁶-C₆H₃(R⁶)- kann in Formel (XII) der Rest R⁹ auch für einen zweiwertigen aliphatischen oder cycloaliphatischen Rest mit 4 bis 40 Kohlenstoffatomen stehen. Geeignete Diisocyanate dieser Art sind beispielsweise Hexamethylen-1,6-diisocyanat, Trimethyl-hexamethylen-1,6-diisocyanat (Isomerengemisch) und DDI 1410-Diisocyanat (Hersteller Henkel, USA). Das letztgenannte Produkt ist ein Cyclohexanderivat, bei dem an 4 Ringkohlenstoffatome jeweils ein längerer Alkylrest gebunden ist. Zwei dieser Alkylreste tragen je eine endständige -NCO-Gruppe.

Bei der Herstellung von Polyurethanen aus Diolen und Isocyanaten verfährt man vorzugsweise so, daß die Umsetzung von Diol oder Diolgemisch mit Diisocyanat oder Diisocyanatgemisch so durchgeführt wird, daß pro Mol alkoholischer OH-Gruppe 0,9 bis 1,1 Mol -NCO-Gruppen eingesetzt werden.
Enthält das Umsetzungsprodukt (Polyurethan) aus Diol und Diisocyanat noch freie -NCO-Gruppen, so ist es meistens von Vorteil, wenn diese Gruppen blockiert werden. Als Blockierungsmittel eignen sich Ketonoxime wie Butanonoxim oder Methyl-isobutyl-ketonoxim. Diese Blockierung ist nach bekannten Methoden möglich.

Besonders gut geeignet als Komponente C) erfindungsgemäßer Dispersionen sind Oligo- oder Polyurethane, die sich aus Diisocyanaten und bestimmten Diolen der Formel (IX) oder der Formel (XI) erhalten lassen, nämlich Diolen oder Diolgemischen der Formel (IX) in denen X für für - S- steht, a den Wert 2 und b den Wert 1 hat oder Diolen oder Diolgemischen der Formel (XI), in denen X für für -S- steht, a den Wert 1 und b den Wert 1 hat und bei dem alle Reste R⁸ für H stehen.

Ferner ist es bevorzugt, daß R¹ in den Formeln (I) bis (IV) jeweils für eine Methylgruppe steht und in den Formeln (V) bis (VIII) für -CH₂-CH₂-CH₃ oder für -CH₂-CH₂-CH₂-CH₃ steht.

Weiterhin ist es bevorzugt, daß alle Reste R⁵ für CH₃ stehen.

Die Komponente D) erfindungsgemäßer Dispersionen trägt entscheidend zu deren verbesserter Stabilität bei, insbesondere dann, wenn Komponente C) ein Oligo- oder Polyurethan ist oder enthält.
Komponente D) ist ausgewählt aus Verbindungen der oben und in Anspruch 1 genannten Formeln (I) bis (VIII). Sie kann auch ein Gemisch solcher Verbindungen sein.
Verbindungen der Formeln (I) bis (VIII) sind auf dem Markt erhältlich und/oder können nach allgemein bekannten chemischen Methoden hergestellt werden.
Besonders gut geeignet als Komponente D) sind Ethylenglykoldiacetat, 1,2-Proplyenglykoldiacetat, 1,3-Propylenglykoldiacetat, Di- und Tripropylenglykoldiacetat sowie die entsprechenden Propionate an Stelle der Acetate. Gut geeignet sind femer C₁- bis C₄-Alkylester der Glykolsäure.

Vorzugsweise enthalten erfindungsgemäße Dispersionen die Komponenten A) bis D), in folgenden Mengenverhältnissen relativ zueinander:
A: 50 bis 95 Gew.teile, vorzugsweise 65 bis 85 Gew.teile
B: 0,1 bis 20 Gew.teile, vorzugsweise 0,5 bis 5 Gew.teile
C: 3 bis 50 Gew.teile, vorzugsweise 8 bis 40 Gew.teile
D: 0,1 bis 20 Gew.teile, vorzugsweise 0,5 bis 10 Gew.teile

Erfindungsgemäße Dispersionen lassen sich nach Verfahren herstellen, die allgemein bekannt sind, z.B. nach Verfahren, wie sie für die Herstellung wäßriger Dispersionen von R_{F}-Resten enthaltenden Polymeren üblich sind. Ein geeigneter Weg besteht darin, ein Gemisch aus Wasser und Dispergator vorzulegen, in dieses Gemisch das R_{F}-enthaltende Polymer einzurühren und zu homogenisieren, wobei entweder das wäßrige Gemisch oder das R_{F}-Polymer den Stabilisator (Komponente D)) enthalten kann. Es ist auch möglich, Komponente D) erst nach Vereinigen der Komponenten A) bis C) zuzusetzen und nochmals zu homogenisieren. Es kann je nach Art und Menge der Komponenten die Herstellung der Dispersion bei Raumtemperatur oder bei erhöhter Temperatur zweckmäßig sein.
Sollen die fertigen Dispersionen noch zusätzlich einen Extender der unten beschriebenen Art enthalten, so ist es vielfach günstig, diesen vor Herstellung der Dispersion mit dem R_{F}-Polymeren zu vereinigen. Dies kann dadurch geschehen, daß man das Polymer und den Extender in einem organischen Lösungsmittel löst und dann diese Lösung unter Homogenisierung in das Gemisch aus Wasser und Dispergator einrührt. Es kann aber auch dann, wenn kein Extender verwendet wird, von Vorteil sein, das R_{F}-Polymer nicht in reiner Form für die Dispergierung zu verwenden, sondern in Form einer Lösung in einem niedrigsiedenden organischen Lösungsmittel. Geeignete Lösungsmittel sind z.B. niedrigsiedende Ketone.
Nach Dispergierung empfiehlt es sich, das vorhandene organische Lösungsmittel zu entfernen, z.B. mittels Destillation und anschließend ggf. nochmals zu homogenisieren.

Erfindungsgemäße Dispersionen können neben den Komponenten A) bis D) noch weitere Komponenten enthalten. Beispiele hierfür sind bekannte Produkte, die in der Textilveredlung/-ausrüstung verwendet werden wie Weichgriffmittel, Flammschutzmittel, Cellulosevernetzer, Biozide usw.
Vorzugsweise enthalten erfindungsgemäße Dispersionen zusätzlich als Komponente E) einen Extender oder ein Gemisch von Extendern. Hierbei handelt es sich um bekannte Produkte, welche die Wirkung von R_{F}-enthaltenden Polymeren auf Textilien verstärken. Auf diese Weise ist es möglich, den Gehalt an den teuren R_{F}-Polymeren in den Dispersionen niedriger zu halten als in den Fällen, wo ohne Extender gearbeitet wird.

Als Extender werden neben anderen Produkten insbesondere Verbindungen mit reversibel blockierten Isocyanatgruppen verwendet. Diese lassen sich erhalten durch Umsetzung freier Isocyanatgruppen mit Blockierungsmitteln bei Raumtemperatur oder leicht erhöhter Temperatur. Die Reaktion kann nach bekannten Verfahren durchgeführt werden. Bei deutlich höheren Temperaturen, d.h. ab etwa 130°C ist diese Blockierung reversibel unter Rückbildung der Ausgangsverbindungen. Als Blockierungsmittel kommen insbesondere Ketonoxime in Frage wie Butanonoxim oder Methyl-isobutyl-ketonoxim.
Für erfindungsgemäße Dispersionen als Extender geeignet sind die oben genannten Diisocyanate der Formel (XIII), nachdem deren -NCO-Gruppen praktisch quantitativ blockiert worden sind. Es können aber auch Produkte mit mehr als 2 blockierten -NCO-Gruppen pro Molekül verwendet werden. Geeignet als Extender ist mit Ketonoxim blockiertes Isophorondiisocyanat (Hüls-Deutschland) oder mit Oxim blockiertes DESMODUR L 75 (Bayer). Das hier erwähnte Isophorondiisocyanat ist 1-Methyl, 1-Isocyanatomethyl, 3-lsocyanato-, 5,5-dimethyl-cyclohexan. Weitere geeignete Extender sind in der US 5 466 770, US 6 080 830 und EP-A 1 013 687 beschrieben. Insbesondere die in Anspruch 1 der US 6 080 830 definierten Verbindungen sind als Extender sehr gut geeignet.

Es ist günstig, wenn eine erfindungsgemäße Dispersion die Komponenten C) (R_{F}-enthaltendes Oligomer oder Polymer) und E) (Extender) in solchen Mengen enthält, daß das Gewichtsverhältnis C:E im Bereich von 1 : 0,1 bis 1 : 1,5 liegt, vorzugsweise im Bereich von 1 : 0,2 bis 1 : 0,8.

Mit erfindungsgemäßen Dispersionen können Fasermaterialien behandelt werden, um ihnen ölund/oder wasserabweisende, stain-release- bzw. stain repellent-Eigenschaften zu verleihen. Vorzugsweise sind die Fasermaterialien textile Flächengebilde in Form von Geweben oder Gewirken, z.B. solche, die zu Bekleidungs- oder Haushaltsartikeln weiterverarbeitet werden können. Die Fasermaterialien können aus Cellulose-, z.B. Baumwollfasern, bestehen oder aus synthetischen Polymeren wie Polyamiden oder Polyestern oder aus Gemischen solcher Fasern. Das Aufbringen erfindungsgemäßer Dispersionen auf die Fasermaterialien kann nach Methoden geschehen, wie sie in der Textilausrüstung bzw. Textilveredlung allgemein üblich sind, z.B. über Foulard.

Die Erfindung wird nunmehr durch Ausführungsbeispiele veranschaulicht.

### Beispiel 1

### Herstellung einer Mischung aus Polyurethan und Extender (= PUR1)

120 g (0,1 Mol) eines Diols der Formel

(R_{F}-CH₂CH₂-S-CH₂ )₂ C(CH₂OH)₂ (Lieferant Ciba USA)

(R_{F} = Gemisch aus Resten der Formel
CF₃ (CF₂)ₙ- mit n = 8 bis 14)
wurden zusammen mit 16,8 g (0,08 Mol) Trimethyl-hexamethylen 1,6-diisocyanat (VESTANATE TMDI, Firma Degussa-Hüls, Isomerengemisch) in 180 g Methyl-isobutylketon bei 60°C gelöst. Dann wurde auf 90°C erwärmt und ein Katalysatorgemisch, bestehend aus Triethylamin und Dioctylzinndilaurat zugegeben und gerührt, bis keine -NCO-Gruppen mehr nachweisbar waren (IR-Spektrum). Anschließend wurden 39,4 g (0,066 Mol) DDI-1410-Diisocyanat (Henkel USA) und 5,2 g (0,044 Mol) N-Methyl-diethanolamin (Kettenverlängerungsmittel) zugegeben, und die Mischung wurde bei 85°C gerührt, bis keine -NCO-Gruppen mehr im IR-Spektrum nachweisbar waren. Es wurde auf 60°C abgekühlt und dann (als Extender) 87,6 g (0,1 Mol) DESMODUR L 75 (Polymeres Isocyanat, Fa. Bayer) und 34,3 g (0,3 Mol) Methyl-isobutyl-ketonoxim (Fa. Acima) zugegeben. Anschließend wurde bei 70°C gerührt, bis keine NCO-Gruppen mehr nachweisbar waren (IR). Zum erhaltenen Produkt wurde Methyl-isobutyl-keton gegeben, bis das Gesamtgewicht 560 g betrug.

### Beispiel 2

### Herstellung einer Mischung aus Polyurethan und Extender (= PUR 2)

100 g (0,1 Mol) eines Diols der Formel

R_{F}-CH₂-CH(OH)-CH₂-S-CH₂-CH(OH)-CH₂-R_{F}

(R_{F}= CF₃ ( CF₂ )ₙ mit n = 6 bis 12)
(Lieferant Ciba-USA)
wurden zusammen mit 16,3 g (0,077 Mol) Trimethyl-hexamethylen-1,6-diisocyanat (siehe Beispiel 1) in 232 g Methyl-isobutylketon bei 65°C gelöst. Anschließend wurden bei 65°C 0,09 g Triethylamin und 0,18 g Titantetraethylat, beide als 10 %-Lösung in Methyl-isobutylketon zugegeben. Die Mischung wurde bei 85°C gerührt, bis keine -NCO-Gruppen mehr nachweisbar waren (IR-Spektrum). Nach 12 Stunden Lagerung bei Raumtemperatur wurden 38,4 g DDI-1410-Diisocyanat und 5 g N-Methyldiethanolamin hinzugefügt und die Mischung bei 85°C gehalten, bis keine -NCO-Gruppen mehr nachweisbar waren (IR-Spektrum). Zu dem erhaltenen Produkt wurde Methylisobutylketon zugegeben, bis ein Gesamtgewicht von 472 g erreicht war. Bei 60°C wurden 23,9 Butanonoxim und 84,7 g DESMODUR L 75 (Extender) gegeben und es wurde bei 60°C gerührt, bis keine NCO-Gruppen mehr nachweisbar waren (IR).

### Beispiel 3

### Herstellung einer Mischung aus fluorhaltigem Polyester, fluorhaltigem Polyurethan und Extender

115 g PUR 2 (siehe Beispiel 2, jedoch mit der doppelten Menge Titantetraethylat) und 51 g des nachfolgend beschriebenen Polyesters wurden bei 60°C in 51 g Methylisobutylketon gelöst. Der Polyester war erhalten worden durch Umsetzung von 51 g des in Beispiel 2 genannten R_{F}-Reste enthaltenden Diols und 8,7 g Adipinsäuredimethylester, anschließendes Erhitzen auf 100°C, Zugabe von 1,7 g CH₃-SO₃H, Aufheizen auf 110°C und Anlegen eines Unterdrucks zwecks Abdestillierens von Methanol.

### Beispiel 4 (erfindungsgemäße Dispersion)

180 g des gemäß Beispiel 1 erhaltenen Gemischs aus Polyurethan und Extender (PUR 1) wurden auf 70°C erwärmt und unter Rühren zu einer 70°C warmen Lösung gegeben, welche
- 325 g: Wasser
- 19,1 g: 1,2-Propylenglykoldiacetat
- 6,0 g: eines ethoxilierten Isotridecylalkohols (MARLIPAL O13/100, Fa. Brenntag, DE)
- 3,0 g: eines kationaktiven Dispergators (ETHOQUAD HT/25, Fa. AKZO)
enthielt. Anschließend wurde mit verdünnter Salzsäure der pH auf etwa 2,8 eingestellt, dann bei 60 bis 70°C homogenisiert und das Lösungsmittel unter vermindertem Druck abdestilliert. Man erhielt eine Dispersion, die auch nach 6-wöchiger Lagerung bei 40°C noch homogen war und keine Abscheidungen aufwies.

### Beispiel 5 (erfindungsgemäße Dispersion)

Beispiel 4 wurde wiederholt, wobei jedoch 19,1 g Ethylenglykoldiacetat statt 19,1 g Propylenglykoldiacetat bei der Dispergierung verwendet wurden. Auch hier wurde eine Dispersion erhalten, die nach mehrwöchiger Lagerung bei 40°C gute Stabilität und Homogenität aufwies.

### Beispiel 6 (erfindungsgemäße Dispersion)

Beispiel 4 wurde wiederholt mit dem Unterschied, daß 19,1 g

n-C₄H₉-O-CO-CH₂-OH

an Stelle von 19,1 g Propylenglykoldiacetat verwendet wurden. Die erhaltene wäßrige Dispersion war nach mehrwöchiger Lagerung bei 40°C stabil und homogen.

### Beispiele 7, 8, 9 (erfindungsgemäß)

Die Beispiele 4, 5 und 6 wurden mit PUR 2 (gemäß Beispiel 2) an Stelle von PUR 1 wiederholt. In allen Fällen erhielt man Dispersionen, welche auch nach mehrwöchiger Lagerung bei 40°C stabil/homogen waren.

### Beispiel 10 (nicht erfindungsgemäßes Vergleichsbeispiel)

Beispiel 4 wurde wiederholt, jedoch unter Ersatz der 19,1 g Propylenglykoldiacetat durch 19,1 g Wasser. Die erhaltene Dispersion enthielt also keine in Anspruch 1 genannte Komponente D). Es wurde eine wäßrige Dispersion erhalten, welche über einen kurzen Zeitraum stabil war, aber schon nach wenigen Stunden nicht mehr homogen war, sondern Abscheidungen aufwies.
Ein Ersatz des Propylenglykoldiacetats durch 1,2-Propylenglykol statt durch Wasser (auch diese Dispersion enthielt also keine Komponente D)) brachte zwar eine gewisse Verbesserung in der Stabilität der Dispersion gegenüber der oben in Beispiel 10 beschriebenen Arbeitsweise, jedoch war die erhaltene Dispersion in ihrer Stabilität den erfindungsgemäßen Dispersionen gemäß Beispielen 4 bis 9 unterlegen.

### Beispiel 11 (erfindungsgemäße Dispersion)

Das Gemisch von R_{F}-Polyester, R_{F}-Polyurethan und Extender gemäß Beispiel 3 wurde auf 65°C erwärmt und unter Rühren/Homogenisieren zu einer 65°C warmen Lösung gegeben, welche
264 g Wasser
10,2 g MARLIPAL O13/100
und 13,5 g 1,2-Propylenglykoldiacetat
enthielt. Mit verdünnter Salzsäure wurde der pH auf etwa 3,3 eingestellt, dann unter vermindertem Druck das Methylisobutylketon abdestilliert. Man erhielt eine milchige Dispersion, welche auch nach mehrwöchiger Lagerung bei 40°C stabil war.

## Patentansprüche

1. Wäßrige Dispersion, welche folgende Komponenten enthält:
A) Wasser
B) einen Dispergator oder ein Gemisch von Dispergatoren
C) ein Oligomer oder Polymer, welches mindestens einen Perfluoroalkylrest (R_{F}) enthält oder ein Gemisch von solchen Oligomeren oder Polymeren
D) einen Stabilisator oder ein Gemisch von Stabilisatoren, ausgewählt aus Verbindungen der Formeln (I) bis (VIII) 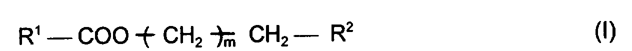 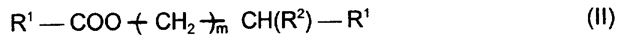 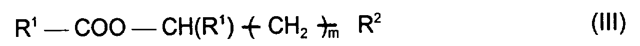 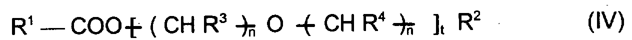 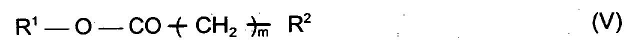 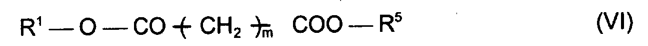 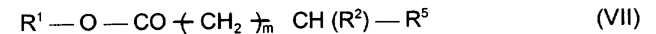 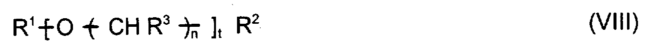 wobei alle Reste R¹ und alle Reste R⁵ unabhängig voneinander jeweils für einen Alkylrest mit 1 bis 6 Kohlenstoffatomen stehen,
alle Reste R² unabhängig voneinander jeweils für -OH, -OR¹ oder für -OOC-R¹ stehen,
m jeweils für eine Zahl von 1 bis 4 und
n jeweils für eine Zahl von 2 bis 4 steht
wobei t = 1, 2 oder 3 ist
wobei in jeder der Formeln (IV) und (VIII) entweder alle Reste R³ für H stehen oder einer der Reste R³ für R¹ und alle übrigen Reste R³ für H stehen,
wobei entweder alle Reste R⁴ für H stehen oder einer der Reste R⁴ für R¹ und alle übrigen Reste R⁴ für H stehen.

2. Dispersion nach Anspruch 1, **dadurch gekennzeichnet, daß** Komponente B) ein nichtionischer oder ein kationischer Dispergator oder ein Gemisch solcher Dispergatoren ist.

3. Dispersion nach Anspruch 1 oder 2, **dadurch gekennzeichnet, daß** die in Komponente C) anwesenden Reste R_{F} Reste der Formel 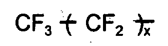 sind, wobei x für eine Zahl von 3 bis 21, vorzugsweise von 5 bis 17 steht.

4. Dispersion nach einem oder mehreren der Ansprüche 1 bis 3, **dadurch gekennzeichnet, daß** Komponente C) mindestens ein Oligourethan oder Polyurethan enthält, das R_{F}-Gruppen enthält.

5. Dispersion nach Anspruch 4, **dadurch gekennzeichnet, daß** das Oligourethan oder Polyurethan erhältlich ist durch Umsetzung eines Diols oder eines Gemischs von Diolen, ausgewählt aus Diolen der Formeln (IX) bis (XII) 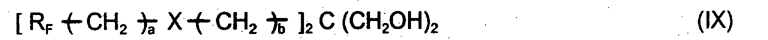 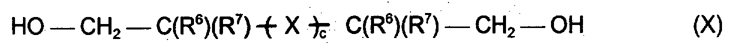 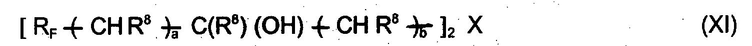
( R_{F} ― CH = CH ― CH₂ ― O ― CH₂ ― CH(OH) ― CH₂ )₂ X (XII)
mit einem Diisocyanat oder einem Gemisch von Diisocyanaten, ausgewählt aus Verbindungen der Formel (XIII)
O=C=N―R⁹―N=C=O (XIII)
wobei diese Umsetzung gegebenenfalls in Anwesenheit zusätzlicher Diole durchgeführt wird, die keine Fluoratome enthalten,
wobei
R_{F} die in Anspruch 3 genannte Bedeutung besitzt,
a für eine Zahl von 1 bis 4, vorzugsweise für 2 steht,
b für 0 oder 1 steht,
c für 0 oder 1 steht,
X für -O-, -S-, oder -NR⁴-, vorzugsweise für -S-, steht,
R⁶ für Wasserstoff oder für R¹ steht,
wobei R¹ die in Anspruch 1 genannte Bedeutung besitzt,
R⁷ für 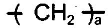 RF steht, wenn c=1 und für -X 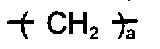 R_{F} steht, wenn c=0,
R⁸ für Wasserstoff oder einen unverzweigten oder verzweigten Alkylrest mit 1 bis 18, vorzugsweise mit 2 bis 6 oder mit 16 bis 18, Kohlenstoffatomen steht.
R⁹ für einen zweiwertigen aliphatischen oder cycloaliphatischen Rest mit 4 bis 40 Kohlenstoffatomen steht oder für einen zweiwertigen aromatischen Rest der Formel -C₆H₃(R⁶)-oder -C₆H₃(R⁶)-CH₂-C₆H₃(R⁶)- oder -C₆H₃(R⁶)-C R⁶₂-C₆H₃(R⁶)- steht,
wobei C₆H₃ für den dreiwertigen, von Benzol abgeleiteten Rest steht,
wobei für den Fall, daß das Umsetzungsprodukt aus Diol und Diioscyanat noch Isocyanatgruppen enthält, diese Isocyanatgruppen gegebenenfalls blockiert werden, vorzugsweise mit einem Ketonoxim.

6. Dispersion nach Anspruch 5, **dadurch gekennzeichnet, daß** die Umsetzung von Diol oder Diolgemisch mit Diisocyanat oder Diisocyanatgemisch so durchgeführt wird, daß pro Mol alkoholischer OH-Gruppe 0,9 bis 1,1 Mol -NCO-Gruppen eingesetzt werden.

7. Dispersion nach Anspruch 5 oder 6, **dadurch gekennzeichnet, daß** für die Umsetzung ein Diol oder Diolgemisch der Formel (IX) eingesetzt wird, bei dem X für -S- steht, a den Wert 2 und b den Wert 1 hat.

8. Dispersion nach Anspruch 5 oder 6, **dadurch gekennzeichnet, daß** für die Umsetzung ein Diol oder Diolgemisch der Formel (XI) eingesetzt wird, bei dem X für -S- steht, a den Wert 1 und b den Wert 1 hat und bei dem alle Reste R⁸ für H stehen.

9. Dispersion nach einem oder mehreren der Ansprüche 1 bis 8, **dadurch gekennzeichnet, daß** R¹ in den Formeln (I) bis (IV) jeweils für eine Methylgruppe steht und in den Formeln (V) bis (VIII) für -CH₂-CH₂-CH₃ oder für -CH₂-CH₂-CH₂-CH₃ steht.

10. Dispersion nach einem oder mehreren der Ansprüche 1 bis 9, **dadurch gekennzeichnet, daß** alle Reste R⁵ für CH₃ stehen.

11. Dispersion nach einem oder mehreren der Ansprüche 1 bis 10, **dadurch gekennzeichnet, daß** sie die Komponenten A) bis D) in folgenden Mengenverhältnissen relativ zueinander enthält.
A: 50 bis 95 Gew.teile, vorzugsweise 65 bis 85 Gew.teile
B: 0,1 bis 20 Gew.teile, vorzugsweise 0,5 bis 5 Gew.teile
C: 3 bis 50 Gew.teile, vorzugsweise 8 bis 40 Gew.teile
D: 0,1 bis 20 Gew.teile, vorzugsweise 0,5 bis 10 Gew.teile

12. Dispersion nach einem oder mehreren der Ansprüche 1 bis 11, **dadurch gekennzeichnet, daß** sie als Komponente E) zusätzlich einen Extender enthält.

13. Dispersion nach Anspruch 12, **dadurch gekennzeichnet, daß** sie die Komponenten C) und E) in solchen Mengen enthält, daß das Gewichtsverhältnis C:E im Bereich von 1 : 0,1 bis 1 : 1,5 liegt, vorzugsweise im Bereich von 1 : 0,2 bis 1 : 0,8.

14. Verwendung einer Dispersion gemäß einem oder mehreren der Ansprüche 1 bis 13 zur Behandlung von Fasermaterialien.

15. Verwendung nach Anspruch 14, **dadurch gekennzeichnet, daß** die Fasermaterialien textile Flächengebilde in Form von Geweben oder Gewirken sind.
